# EUROPEAN PATENT SPECIFICATION

(11) **EP 0 963 919 B1**
(45) Date of publication and mention of the grant of the patent: **03.03.2004**
(21) Application number: 99830308.5
(22) Date of filing: 19.05.1999
(51) Int. Cl.: B65D 88/32, B65D 88/10, B65G 69/04

(54) **Modular silo for storing chlorides, including a disc-shaped distributor**
Modularsilo zum Lagern von Chloriden, mit einem scheibenförmigen Verteiler
Silo modulaire pour stocker des chlorides, avec un distributeur en forme de disque

(30) Priority: 12.06.1998 IT RM980382
(43) Date of publication of application: 15.12.1999
(73) Proprietor: AUTOSTRADE S.p.A., I-00159 Roma (IT)
(72) Inventor: Goretti, Pasquale, 00159 Roma (IT)
(74) Representative: Fiammenghi-Domenighetti, Delfina

(56) References cited:
- EP-A- 0 950 622
- WO-A-90/12746
- US-A- 1 468 647
- US-A- 1 783 003
- US-A- 4 159 151

## Description

The present invention relates to a silo for storing solid and dissolved chlorides, which are used for roading during the winter, wherein solid chlorides are employed in order to melt the ice formed on the road, and dissolved chlorides are used to prevent ice formation, that is as a precautionary measure, and are sprinkled on the road surface.

One of the outstanding features of modern economy is that services and manufacture of goods is done in a very organized and distributed way on the territory.

Thus, the "mobility" of goods and services can be considered as an integral part of the production, and this means that transportation in general, and particularly transportation on roads, can be considered as part of the production.

It has been estimated, referring to the introduction to the European Project DRIVE II, which concerns road traffic, that an increase of 1% of the GNP will result in an increase of 1.5% of the transport of goods and of 3.5% of the transport of persons and services.

The above discussion puts in evidence the importance of the availability of a fully efficient road network, even in presence of disadvantageous meteorological conditions, like ice and snow.

This results in a number of requisites being imposed on the methods employed, the rapidity of intervention, the efficiency, and consequently on the means used for roading (that is road maintenance) in the winter.

The traditional chloride storing systems are used exactly for the purpose of ensuring - due to their distribution on the territory - an immediate transportation of these materials towards the location of utilization.

This is done by means of appropriate vehicles called spreaders or spreading machines.

Storing by traditional methods may be performed by accumulation of the material on a certain area, by using storage floors, vertical silos, or by other means.

However, particularly vertical silos have many drawbacks, due to their influencing the environment because of their external appearance.

In fact, their height is approximately 18 meters. Up to now, nobody has succeeded in providing an efficient system which is at the same time environment friendly.

US 1,783,003 discloses a storage bin or trestle, for storing solid materials, formed by a plurality of storage pockets placed side by side. These storage pockets are located on the upper floor of the storage bin, and they form modules allowing to adapt the silo's capacity to particular needs.

The ground floor of the storage bin is crossed by longitudinal tunnels which are arranged beneath respective storage pockets (modules) and are parallel thereto.

The storage pockets are open at their upper ends and are surmounted by two railways arranged side by side, at right angles to the storage pockets.

Railway cars, running on the railways, are used to discharge solid materials into the storage pockets.

The floor of each storage pocket also forms a roof for a corresponding longitudinal tunnel (truck driveway).

However, in this arrangement the pockets (modules) are physically separated from each other by transverse walls, and the solid material is unloaded independently from each pocket (module), into a truck. Moreover, the solid material is transferred towards the solid materials discharge outlets by means of the bulged configuration of the pockets floor and by means of stationary deflectors. In the present invention, on the other hand, the solid material is transferred to the discharge outlets by means of movable reciprocating means, and the longitudinal tunnel extends at 90° with respect to the longitudinal extension of the modules. Moreover, the separation into four quadrants is only ideal and not physical.

An object of the present invention is to realize a silo of reduced height, preferably of about 10-12 meters, which is compatible with the requisites of town plans and landscape regulations.

A further object of the present invention is to provide a new system for filling up the silo, based on the traditional known pneumatic system for discharging tank trucks filled with loose (bulk) material, wherein, however, the system also includes in the present case a disc-shaped distributor with directable flow, which is located at the upper end of the silo, in order to optimize the available filling space.

Another object of the present invention is to realize a silo having a modular structure, a loading tunnel for the vehicles used for roading during the winter, and a variable length according to the number of extraction tracks, wherein each extraction track is associated to a module.

By varying the number of modules it will be possible to construct plants with different loading capacities, e.g. 500 t, 650 t, 820 t, 1000 t, etc.

A last object of the present invention is the use of cylindrical calendered vitrified sheets for constructing the walls of the silo, resulting in a noticeable reduction of the necessary building material and in a lesser weight of the whole structure making up the silo.

The above objects are attained by constructing a silo with a parallelepipedal shape, possibly having a flat roof or a roof like that of ordinary houses, and comprising a disc-shaped distributor directing the throw of material (chloride) towards a "quadrant", that is only towards a quarter of the inner storage volume of the silo. The possibility of orienting the throw ensures uniform distribution of chlorides inside the silo, since the throw will always be directed towards the "quadrant" with the least amount of material.

This distribution system allows to reduce the height of the silo, since the available inner space is optimized. Moreover, the third and fourth objects are attained by means of calendered sheets, which are mounted in a tensile manner, on the support columns or standards of the supporting structure, each module being laterally bounded by respective vitrified calendered sheets and comprising its own associated extraction track.

The present invention will now be described in more detail with reference to a particular embodiment thereof, which is shown only for illustrative and non limitative purposes in the drawings, wherein:
FIG. 1 is a front sectional view of the silo of the present invention;
FIG. 2 is a lateral sectional view taken in the direction of the arrow A of Fig. 1;
FIG. 3 is a schematical plan view of the silo of Figs. 1,2, wherein the central position of the disc-shaped chloride distributor is put in evidence;
FIG. 4 is a cross-section of the disc-shaped chloride distributor (dispenser);
FIGS. 5a to 5d are schematical drawings for illustrating the operation of the disc-shaped distributor;
FIG. 6 is a cross-section of part of the silo's wall, showing the tensile mounting method of a cylindrical vitrified sheet on two colums or standards of the silo's supporting structure;
FIG. 7 is a vector representation of the forces involved.

The silo has the feature of having a very compact size and of optimizing the space available inside it.

The height of the silo does not exceed 10-12 meters, its width is usually limited to 11 meters, and the length may vary between 11 and 16 meters, the loading capacity with sodium chloride reaching the value of 1000 t.

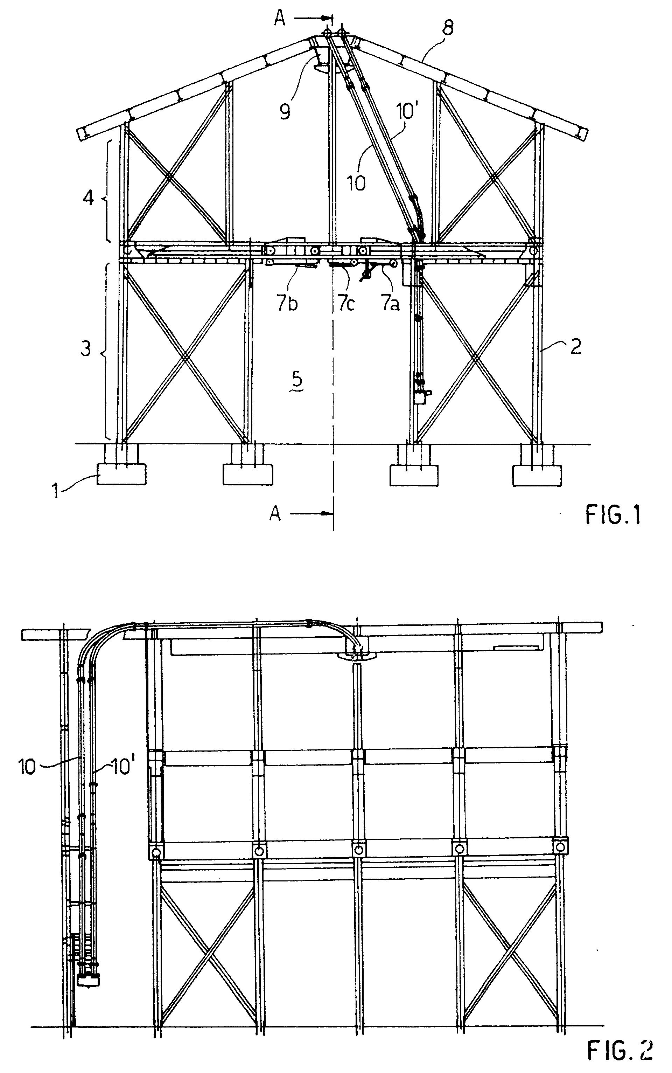

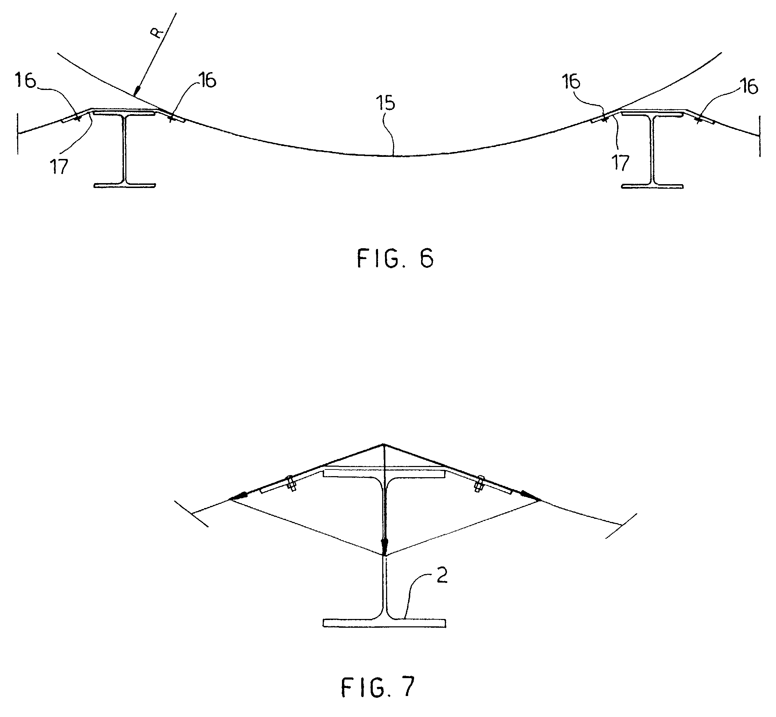

As shown in Fig. 1, the silo is constructed on a standard foundation of reduced excavation depth, using prefabricated plinths 1 of reinforced concrete, whereon the standards or columns 2 forming H-beams are mounted (see Fig. 7).

The silo comprises a lower floor 3 and an upper floor 4. The spreaders move on the lower floor 3 when passing through the central tunnel 5, and the chlorides resting on the upper floor 4 are unloaded in the spreaders (spreading machines).

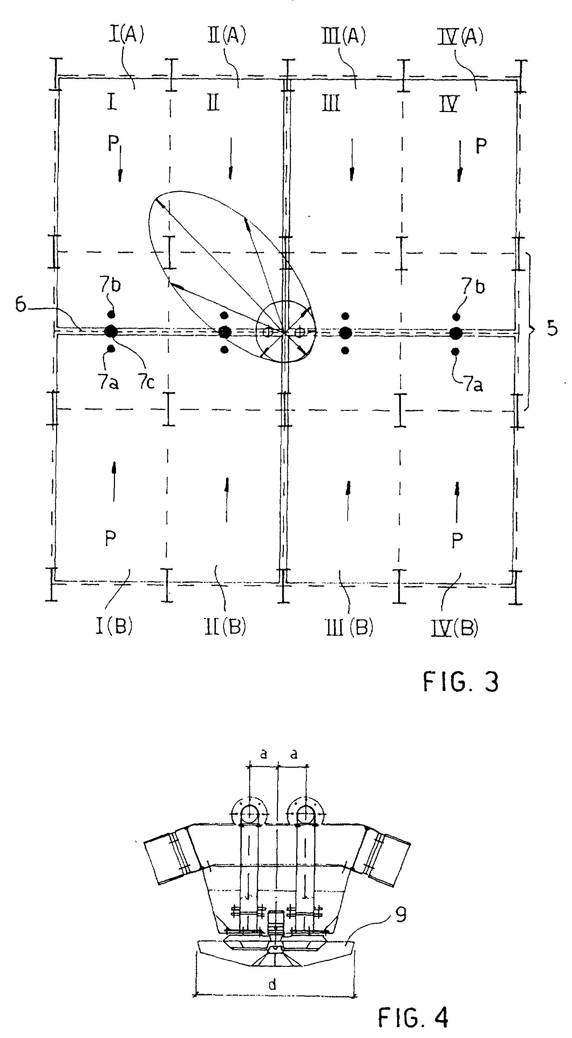

As shown in the plan view of Fig. 3, the present embodiment of the silo comprises four tracks I,II,III, IV, located on the upper floor 4, including extraction devices used for conveying sodium chloride towards the center of the silo, indicated by the triple line 6 in Fig. 3. These tracks I, II, III, IV are associated with respective modules I, II, III, IV. Each module is constructively identical to the other modules, and by using more modules it becomes possible to increase the length of the silo and therefore to increase its capacity, up to, e.g. 1000 t of sodium chloride.

The extraction devices are the object of another patent application of the same Applicant, and they allow to displace the sodium chloride towards the three trapdoors 7a, 7b, 7c of Fig. 1, as indicated by the arrows P. In Fig. 1 it can be noted that the three trapdoors including two lateral ones 7a, 7b and a central one 7c, are located above the central tunnel 5 -where the spreaders pass through-, and which is also shown in Fig. 3.

In the present embodiment comprising 4 modules, the total number of the lateral trapdoors is 8, and that of the central trapdoors is 4.

They are all arranged along the central tunnel 5.

Usually, cylindrical silos do not require extraction devices, because salt falls by gravity along the cylindrical wall and exits from a central hole wherefrom it is discharged in the spreading machines.

Since the present invention relates to a silo of parallelepipedal form having a lower height, and since the upper floor 4 is not slanting, the above mentioned extraction devices are required.

The influence of the silo on the landscape is reduced, because the silo's height reaches at most 12 meters and externally it looks like a large roading shed which may be closed by means of sliding doors, in order to prevent the salt from coming out.

A spreading disc or disc shaped distributor 9 is centrally mounted according to the present invention, at the apex of the silo, and in the present case at the inner upper end of the roof 8, and this disc is shown in further detail in the cross-section of Fig. 4.

The way of operation of the disc is that of the small discs incorporated in the spreaders, which are used to direct the throw of chlorides (falling by gravity) towards one side of the road. Analogously, the present invention makes use of the same principle, in order to uniformly distribute the chlorides inside the silo, on the upper floor 4. If, for instance, the chloride was discharged from the trapdoor 7b of the extraction track I, the disc-shaped distributor 9 will operate to direct the throw- as will be shortly explained- towards the upper quadrant on the left hand side of Fig. 3, which is formed of the two "extraction half-tracks" I(A) and II(A). This operative condition is shown in Fig. 3.

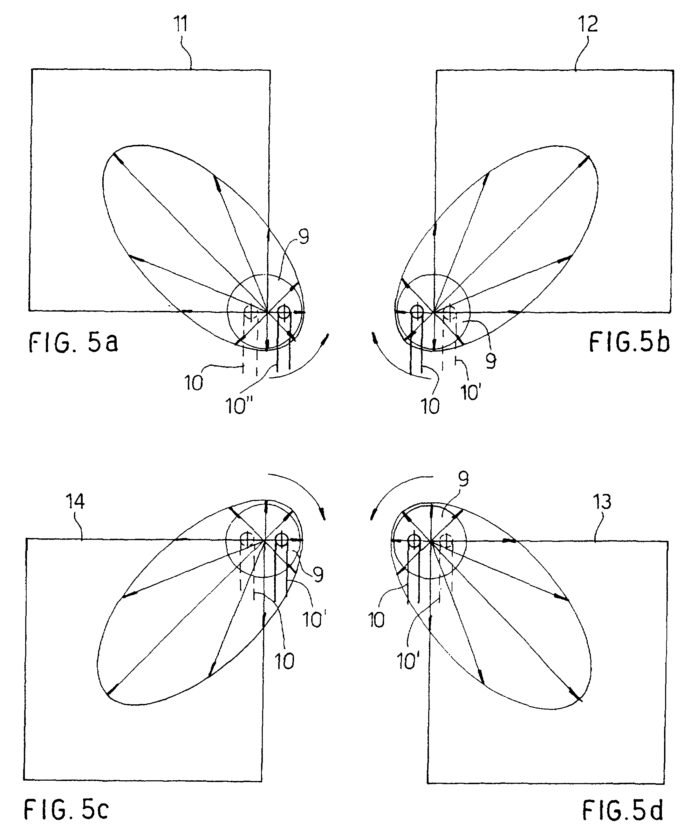

The disc 9 is capable of directing about 90% of the solid chloride towards one of the following quadrants, as shown in Figs. 5a-5d;
Quadrant N. 1: half-tracks I(A), II(A);
Quadrant N. 2: half-tracks III(A), IV(A);
Quadrant N. 3: half-tracks III(B), IV(B);
Quadrant N. 4: half-tracks I(B), II(B).

The length of the vectors in Figs. 5a-5d illustrate the amount of material being projected in the corresponding direction.

As shown in Fig. 4, the disc 9 is upwardly concave and is provided with a plurality of circumferential slits. It has been conceived specifically for the present application and has a size considerably larger than the usual discs of spreading machines.

The loading system includes two tubes 10, 10' for pneumatically feeding the granulated material. Said tubes terminate according to a predetermined adjustable spacing, above the disc-shaped distributor 9 directing the throw.

The "jet" composed of granulated material leaves the disc according to a predetermined angular shift (direction) with respect to the axis of the feeding tube. Said angular shift depends on the spacing (a) between the axis of the disc 9 and the axis of the feeding (or loading) tube 10 or 10'.

According to the current embodiment there are provided two loading tubes 10, 10' and both directions of rotation of the disc -shaped distributor 9 are possible.

The inner space of the storage container is ideally subdivided into four quadrants, and the disc 9 is located at the center thereof.

Using a spacing of 200 mm and a diameter of the disc 9 equal to 1000 mm, an angular shift of 135° is obtained and it will therefore be possible to:
- load the quadrant 12 by means of the tube 10 and rotating the disc to the right;
- load the quadrant 13 by means of the tube 10 and rotating the disc to the left;
- load the quadrant 14 by means of the tube 10' and rotating the disc to the right;
- load the quadrant 11 by means of the tube 10' and rotating the disc to the left.

The numbers 11, 12, 13, 14 respectively indicate the first, second, third and fourth quadrant, as they have been defined above (Fig. 3).

It will be noted that this salt distribution system - assisted by a system of strainmeters for measuring the load on each quadrant- will allow to optimize the use of the available space, as compared with the pneumatic loading system employed in the cylindrical silos, thereby saving 2m of vertical extension.

The completely automatic control system is based on an industrial PC and a user interface with a touch-sensitive screen. The computer sends control signals to a control unit, and the latter actuates the extraction devices, which move the chlorides towards the central trapdoor 7c.

Moreover, the computer immediately determines which rotation direction of the disc is to be selected, and at the same time, the tube 10 or 10' to be connected to the tank truck. A hydraulic motor which is actuated by means of the hydraulic control unit, is capable of rotating the disc 9, also with different angular velocities.

Additional hydraulic motors, controlled by the hydraulic control unit located on the ground floor 3, are used to open or close the central trapdoors 7c. In case of malfunction of the computer, both the disc 9 and the extraction devices may be manually operated, directly through the control unit, by moving appropriate levers.

In case of interruption of power supply, the lateral trapdoors 7a, 7b may be used, which are provided with manually operable reduction gears actuated by chains and having a very advantageous transmission ratio.

Therefore, it will always be possible to perform all actions, even manually, using direct hydraulic commands, and in case of interruption of power supply it will be possible to open the lateral trapdoors and to load the spreading machines by gravity.

A detailed description of the operation of the trapdoors 7a, 7b, 7c and of the extraction devices, will be given in a second patent application of the same Applicant, which concerns a silo of the same type.

Another aspect of the present invention relates to the tensile application of vitrified thin sheet metal plates.

Usually, said circular calendered sheet metal plates are used to form the walls of a cylindrical silo. They do not include reinforcements or ribs. The process of vitrification is also well known in the field of manufacture of tanks for chlorides.

The vitrification process is technically applicable only for thicknesses limited to 6-10 mm and for this reason only cylindrical silos have been realized up to now.

In order to be able to use vitrified sheet metal plates, at reasonable cost, for the construction of the walls of containers having a shape different from the cylindrical shape, e.g. parallelepipedal, a tensile application of calendered sheet metal plates on a supporting structure made of steel beams, has been studied.

The sheet metal plates used in this circumstance are subjected only to a traction force, and may therefore have very limited thicknesses, within the range of 3-6 mm, which is very advantageous under the technical and economic point of view.

The mounting of calendered sheet metal plates 15 is performed, as shown in fig. 6, on the standards or columns 2 or on the steel made section bars of the roof 8, which may have pitches (Fig. 1) or a flat configuration. The assembling is performed using bolts 16 and adequately shaped connection elements 17. The forces are transmitted to the columns 2, as shown in Fig. 7, for the case of the lateral walls of the silo.

The silo also comprises a storage tank for a solution of calcium chloride, having a capacity of for instance 40000 liters, which is incorporated at the ground floor in the supporting structure of the plant, and is provided with a completely automatic solution displacement system capable of performing the following functions: tank loading, spreader loading, programmed recirculation and recirculation on request.

As previously mentioned, a detection system is provided for continuosly monitoring the stock, which is based on strainmeters applied on the supporting standards of the structure (for the granulated chlorides) and on a submersed electronic pressure transducer (for monitoring the amount of chloride solution).

Moreover, a user interface with a touch-sensitive screen, interlocked to an industrial PC provided with a specific resident software, manages all functions of the plant.

## Claims

1. A silo for storing solid and dissolved chlorides, comprising a plurality of modules allowing to adapt the silo's capacity to the particular needs, a ground floor (3) crossed by a longitudinal tunnel (5) traversed by the spreading machines, an upper floor (4) for storing solid chlorides, wherein the said modules are parallel to each other, whereby the modules extend transversely with respect to the longitudinal tunnel (5), and each of said modules comprises respective half-tracks (I(A), I(B); II(A), II(B); III(A), III(B); IV(A), IV(B)) of a reciprocating extraction system, said half-tracks being arranged symmetrically with respect to the longitudinal symmetry axis (6) of the silo; **characterized in that** the silo further comprises a disc-shaped distributor (9) which is centrally mounted on the roof (8), on its inner side, and which selectively distributes pneumatically the chlorides loaded on the silo towards one of the four quadrants which ideally subdivide the upper floor (4) used for storing the chlorides; said disc-shaped distributor (9), in order to be capable of directing the throw towards a specific "quadrant", may be rotated clockwise or anti-clockwise, and the loading tubes (10, 10') of the chloride are mounted in such a way that the axis of their outlets are symmetric and shifted (a) with respect to the center of the disc (9); one of said quadrants being selected according to the weight acting thereon, which must be less than the weight acting on the remaining three quadrants, and the throw of chlorides being directed towards this quadrant by selecting a combination between a loading tube (10, 10') and a particular rotation direction of the disc (9).

2. A silo for storing solid and dissolved chlorides according to claim 1, **characterized in that** the disc (9) is upwardly concavely shaped and has several peripheral slits.

3. A silo for storing solid and dissolved chlorides, according to claim 1, **characterized in that** a diameter of the disc of 1000 mm and a spacing (a) of 200 mm leads to a throw directed according to an angle of 45°, 135°, 225°, or 315° respectively.

4. A silo for storing solid and dissolved chlorides according to claim 1, **characterized in that** it comprises a supporting structure formed by steel-made section bars (2), and the plugging up is performed by means of tensile vitrified cylindrical sheet metal plates (15).

5. A silo for storing solid and dissolved chlorides according to claim 1, 2, or 3, **characterized in that** the disc distributor (9) is actuated by a hydraulic motor with adjustable velocity controlled by a control unit located at the ground floor (3), and the control from the hydraulic control unit can be performed manually or automatically by means of a computer.

6. A silo for storing solid and dissolved chlorides according to claim 1, **characterized in that** the movement of the extraction devices along the half-tracks (I(A), I(B); II(A), II(B); III(A), III(B); IV(A), IV(B)) is done by means of hydraulic actuators which are controlled by the control unit located at the ground floor (3), manually or automatically by means of a computer.

## Patentansprüche

1. Silo zum Lagern fester und gelöster Chloride, umfassend eine Mehrzahl von Modulen, die es ermöglichen, das Fassungsvermögen des Silos an einen bestimmten Bedarf anzupassen, ein Erdgeschoss (3), das durch einen Längstunnel (5) gekreuzt wird, der durch Verteilungsmaschinen durchlaufen wird, ein Obergeschoss (4) zum Lagern fester Chloride, wobei die Module parallel zueinander sind, wobei die Module sich transversal zu dem Längstunnel (5) erstrecken, und jedes der Module umfasst jeweilige Halbpfade (I(A), I(B); II(A), II(B); III(A), III(B); IV(A), IV(B)) eines Hubabsaugsystems, wobei die Halbpfade symmetrisch zu der Längssymmetrieachse (6) des Silos angeordnet sind, **dadurch gekennzeichnet, dass** das Silo ferner einen scheibenförmigen Verteiler (9) aufweist, der zentral an dem Dach (8) auf dessen innerer Seite montiert ist, und der selektiv pneumatisch die in dem Silo gelagerten Chloride zu einem der vier Quadranten verteilt, welche das zum Lagern der Chloride verwendete Obergeschoss (4) ideal aufteilen; wobei der scheibenförmige Verteiler (9) im Urzeigersinn und entgegen des Urzeigersinns rotiert werden kann, um in der Lage zu sein, den Wurf zu einem bestimmten "Quadranten" zu richten, und Laderohre (10, 10') des Chlorids sind derart montiert, dass die Achsen ihrer Auslässe symmetrisch und in Bezug auf das Zentrum der Scheiben (9) versetzt (a) sind; wobei einer der Quadranten gemäß dem darauf wirkenden Gewicht, das geringer sein muss, als das auf die verbleibenden drei Quadranten wirkende Gewicht, und dem Wurf von Chloriden, der zu diesen Quadranten gerichtet wird, ausgewählt ist, durch Auswählen einer Kombination zwischen einem Laderohr 10, 10' und einer bestimmten Rotationsrichtung der Scheibe (9).

2. Silo zum Lagern fester und gelöster Chloride nach Anspruch 1, **dadurch gekennzeichnet, dass** die Scheibe (9) nach oben konkav geformt ist und mehrere Umfangsschlitze besitzt.

3. Silo zum Lagern fester und gelöster Chloride nach Anspruch 1, **dadurch gekennzeichnet, dass** ein Durchmesser der Scheibe von 1000 mm und ein Abstand (a) von 200 mm zu einem Wurf führt, der zu einem Winkel von 45°, 135°, 225° bzw. 315° gerichtet ist.

4. Silo zum Lagern fester und gelöster Chloride nach Anspruch 1, **dadurch gekennzeichnet, dass** es eine Tragstruktur aufweist, die durch Stahlquerschnittstäbe (2) gebildet ist, und das Verstopfen wird mittels gesinterter, zylindrischer Zugplatten (15) aus Blech durchgeführt.

5. Silo zum Lagern fester und gelöster Chloride nach Anspruch 1, 2 oder 3, **dadurch gekennzeichnet, dass** der Scheibenverteiler (9) durch einen Hydraulikmotor mit einstellbarer Geschwindigkeit betätigt wird, der durch eine im Erdgeschoss (3) gelegene Steuereinheit gesteuert wird, und die Steuerung von der hydraulischen Steuereinheit kann manuell oder automatisch mittels eines Computers durchgeführt werden.

6. Silo zum Lagern fester und gelöster Chloride nach Anspruch 1, **dadurch gekennzeichnet, dass** die Bewegung der Absaugvorrichtungen entlang der Halbpfade (I(A), I(B); II(A), II(B); III(A), III(B); IV(A), IV(B)) mittels hydraulischer Aktoren ausgeführt wird, die durch eine im Erdgeschoss (3) gelegene Steuereinheit manuell oder automatisch mittels eines Computers gesteuert werden.

## Revendications

1. Silo pour stocker des chlorures solides et dissous, comprenant plusieurs modules qui permettent d'adapter la capacité du silo aux besoins particuliers, un étage inférieur (3) croisé par un tunnel longitudinal (5) traversé par les machines de répandage, un étage supérieur (4) pour le stockage de chlorures solides, dans lequel les dits modules sont parallèles les uns aux autres, de sorte que les modules s'étendent transversalement par rapport au tunnel longitudinal (5), et chacun des dits modules comprend des demi-chemins [I(A), I (B) ; II (A) , II(B) ; III(A), III (B) ; IV(A), IV(B)] d'un système d'extraction à va et vient, les dits demi-chemins étant disposés symétriquement par rapport à l'axe longitudinal de symétrie (6) du silo, **caractérisé en ce que** le silo comprend de plus un distributeur en forme de disque (9) qui est monté centralement sur le toit (8), sur sa face intérieure, et qui distribue pneumatiquement de façon sélective les chlorures chargés sur le silo vers l'un des quatre quadrants qui, en idée, subdivisent l'étage supérieur (4) utilisé pour le stockage des chlorures ; le dit distributeur (9) en forme de disque, afin de pouvoir diriger le jet vers un quadrant spécifique, peut être entraîné en rotation dans le sens horaire ou anti-horaire, et les tubes (10, 10') de chargement des chlorures sont montés de telle façon que les axes de leurs sorties sont symétriques et déplacés (a) par rapport au centre du disque (9) ; l'un des dits quadrants étant choisi selon le poids agissant sur lui, lequel doit être inférieur au poids agissant sur les trois quadrants restant, et le jet de chlorures étant dirigé vers ce quadrant par sélection d'une combinaison d'un tube de chargement (10, 10') et d'une direction particulière de rotation du disque (9).

2. Silo pour le stockage de chlorures solides et dissous selon la revendication 1, **caractérisé en ce que** le disque (9) présente une concavité vers le haut et comporte plusieurs fentes périphériques.

3. Silo pour le stockage de chlorures solides et dissous selon la revendication 1, **caractérisé en ce qu'**un diamètre du disque de 1000 mm et un écartement (a) de 200 mm mènent à un jet dirigé selon un angle de 45°, 135°, 225° ou 315° respectivement.

4. Silo pour stocker des chlorures solides et dissous selon la revendication 1, **caractérisé en ce qu'**il comprend une structure de support formée de sections de barre d'acier (2), et **en ce que** le transfert est effectué au moyen de plaques cylindriques vitrifiées (15) en tôle métallique élastique.

5. Silo pour le stockage de chlorures solides et dissous selon la revendication 1, 2 ou 3, **caractérisé en ce que** le distributeur (9) en forme de disque est actionné par un moteur hydraulique dont la vitesse réglable est commandée par un ensemble de commande disposé à l'étage inférieur (3), et la commande depuis l'ensemble de commande hydraulique peut être réalisée manuellement ou automatiquement par un ordinateur.

6. Silo pour le stockage de chlorures solides et dissous selon la revendication 1, **caractérisé en ce que** le déplacement des dispositifs d'extraction le long des demi-chemins [I(A), I(B) ; II(A), II(B) ; III(A), III(B) ; IV(A), IV(B)] est effectué au moyen de vérins hydrauliques qui sont commandés par l'ensemble de commande disposé à l'étage inférieur (3), manuellement ou automatiquement par un ordinateur.
